# EUROPEAN PATENT APPLICATION

(11) **EP 2 301 898 A1**
(43) Date of publication of application: **30.03.2011**
(21) Application number: 09305911.1
(22) Date of filing: 29.09.2009
(51) Int. Cl.: C03B 17/06

(54) **Glass texturing using a porous textured roll under vacuum**

(71) Applicant: Corning Incorporated, Corning NY 14831 (US)
(72) Inventor: Bisson, Antoine, 77520 Montigny Lencoup (FR); Fredholm, Allan, 77870 Vulaines Sur Seine (FR)
(74) Representative: Le Roux, Martine

(57) **Abstract**

A glass manufacturing system (200), a roll apparatus (202) and a method are described herein that manufacture a textured glass sheet (205) by using a porous textured roll (250) which is under a vacuum.

## Description

### TECHNICAL FIELD

The present invention relates to a glass manufacturing system, a roll apparatus and a method for manufacturing a textured glass sheet by using one or more porous textured rolls under a vacuum.

### BACKGROUND

Texturing of glass sheets has been of interest lately in several applications because textured glass sheets can help to improve or modify some characteristics of a product. For instance, in a photovoltaic application, a textured glass sheet is a potential lever to increase the efficiency and optical properties of photovoltaic devices. In a similar way, a textured glass sheet could help optimize light extraction from organic light emitting diode (OLED) lighting devices. The textured glass sheet can have anyone of a variety of textured patterns such as, for example, spherical portions, grooves, prismatic shapes or random shapes. However, when considering the texturing phase during the glass sheet forming process, some textured geometries become more difficult to achieve than other textured geometries. For instance, sub-millimeter textured shapes (<1 mm textured shapes) like prismatic shapes can be difficult to achieve because their edges need to be as sharp as possible in the glass sheet. A discussion is provided next to explain why it is difficult for conventional processes to successfully manufacture a textured glass sheet.

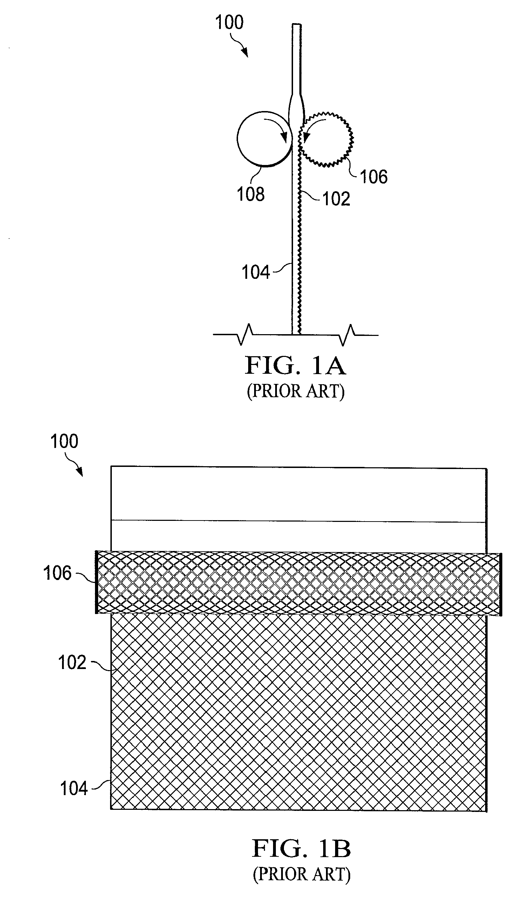

Referring to FIGURES 1A-1C (PRIOR ART), there are illustrated different views of a traditional roll apparatus 100 which is one conventional process that is used to texture patterns 102 into a glass sheet 104. The traditional roll apparatus 100 has two rolls 106 and 108 between which is drawn the glass sheet 104. In particular, the rolling process involves using one textured roll 106 which has a negative pattern of the desired textured pattern 102 embossed on its surface, and a second smooth roll 108 located beside the textured roll 106. The glass sheet 104 flows between the two rolls 106 and 108 causing the textured patterns 102 to be formed on one side of the moving glass sheet 104. A problematic characteristic of the rolling process is that both sides of the glass sheet 104 are contacted by both rolls 106 and 108 resulting in a final textured glass sheet 104 which has no pristine surfaces. This situation may require the post-processing polishing of the side of the textured glass sheet 104 which had contact with the smooth rolling roll 108.

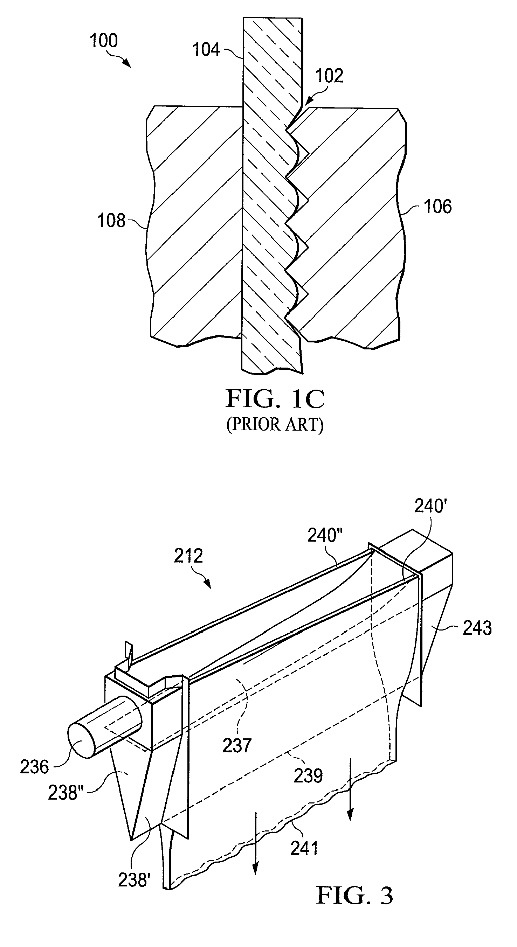

In addition, this rolling process has some limitations in terms of shape and size of the textured patterns 102 relative to the thickness of the sheet 104. The driver to force the glass sheet 104 to replicate the textured pattern 102 is the pressure applied to the glass sheet 104 by the two rolls 106 and 108. To obtain the appropriate texturing, one has to find a compromise between the sufficient pressure to apply on the glass sheet 104 and the viscosity of the glass sheet 104. If the glass sheet 104 is too fluid, then the shear stress caused by the textured roll 106 is dissipated into a thin layer of the glass sheet 104 such that the texture patterns 102 are not fully replicated, especially for the deepest parts of the texture patterns 102. If the glass sheet 104 is too viscous, then the pressure becomes too small to impose the textured pattern 102 onto the glass sheet 104. This is a common problem since to prevent the glass sheet 104 from sticking to the rolls 106 and 108, the temperature of the rolls 106 and 108 needs to be maintained well below the temperature of the glass sheet 104. The temperature difference results in the glass sheet 104 having a very high viscosity at the interface with the textured roll 106 which limits the ability to form fine, accurate textured patterns 102. FIGURE 1C (PRIOR ART) is a diagram that illustrates the result of this common problem when the rolls 106 and 108 are colder than the glass sheet 104 thus preventing the textured patterns 102 on the textured roll 106 from fully penetrating the glass sheet 104.

Vacuum-assisted re-forming is another process that can be used to texture a glass sheet, but in this case, the suction which is applied on the glass sheet is created by using discrete orifices dispersed on a surface of a non-porous mold. The vacuum process allows the forming of large-scale shapes on the glass sheet, but it cannot form sub-millimeter texture patterns (<1mm textured patterns) on the glass sheet. This limitation comes from the fact that the number of orifices within the non-porous mold needs to be limited, which makes it difficult if not impossible to apply a global suction on the whole surface of the glass sheet. In addition, to prevent the glass sheet from sticking to the non-porous mold (metal non-porous mold), the glass sheet needs to be kept at a relatively high viscosity. This limits the possibility to apply large deformations, which are required when forming sub-millimeter textured features into the glass sheet. Accordingly, it would be desirable to be able to manufacture a textured glass sheet which has one side with well-defined textured patterns (e.g., well-defined sub-millimeter textured patterns) and another side with a pristine surface.

### SUMMARY

A method and a roll apparatus are described in the independent claims of the present application. Advantageous embodiments are described in the dependent claims.

In one aspect, a method is described herein for manufacturing a textured glass sheet. The method includes the steps of: (a) delivering a glass ribbon to a porous textured roll having at least one orifice located therein and below an outer surface thereof, where the porous textured roll receives the glass ribbon on a portion of the outer surface while the glass ribbon is viscous; and (b) applying at least a partial vacuum to the at least one orifice within the porous textured roll to create a first pressure (P1) at an interface between a first side of the glass ribbon and the outer surface of the porous textured roll, where the first pressure is less than a second pressure (P2) on a second side of the glass ribbon such that the difference between the first pressure and the second pressure drives the first side of the glass ribbon towards the outer surface of the porous textured roll to at least substantially replicate a textured pattern on the outer surface of the porous textured roll to form the textured glass sheet.

In another aspect, a roll apparatus is described herein which textures a glass ribbon provided by a fusion forming apparatus. The roll apparatus includes: (i) a porous textured roll which has at least one orifice located therein and below an outer surface thereof, where the porous textured roll is positioned to receive the glass ribbon on a portion of the outer surface while the glass ribbon is viscous and moving in a substantially downward direction from the forming apparatus; and (ii) a vacuum pumping device adapted to apply at least a partial vacuum to the at least one orifice within the porous textured roll to create a first pressure at an interface between a first side of the glass ribbon and the outer surface of the porous textured roll, where the first pressure is less than a second pressure on a second side of the glass ribbon such that the difference between the first pressure and the second pressure drives the first side of the glass ribbon towards the outer surface of the porous textured roll to substantially replicate a textured pattern on the outer surface of the porous textured roll to form the textured glass sheet.

Additional aspects of the present solution will be set forth, in part, in the detailed description, figures and any claims which follow, and in part will be derived from the detailed description, or can be learned by practice of the present solution. It is to be understood that both the foregoing general description and the following detailed description are exemplary and explanatory only and are not restrictive of the present solution as disclosed.

### BRIEF DESCRIPTION OF THE DRAWINGS

A more complete understanding of the present solution may be had by reference to the following detailed description when taken in conjunction with the accompanying drawings wherein:

FIGURES 1A-1C (PRIOR ART) are diagrams illustrating a traditional roll apparatus which is used to texture patterns into a glass sheet;

FIGURES 2 is a schematic view of an exemplary glass manufacturing system which uses a fusion draw process and a roll apparatus to manufacture a textured glass sheet;

FIGURE 3 is a perspective view illustrating in greater detail an isopipe shown in FIGURE 2;

FIGURES 4A-4C are diagrams illustrating in greater detail the isopipe, a controlled environment and the roll apparatus shown in FIGURE 2; and

FIGURE 5-8 are diagrams that illustrate the results of a small scale test in which a textured graphite piece under a vacuum was used to texture a soda lime glass sample.

### DETAILED DESCRIPTION

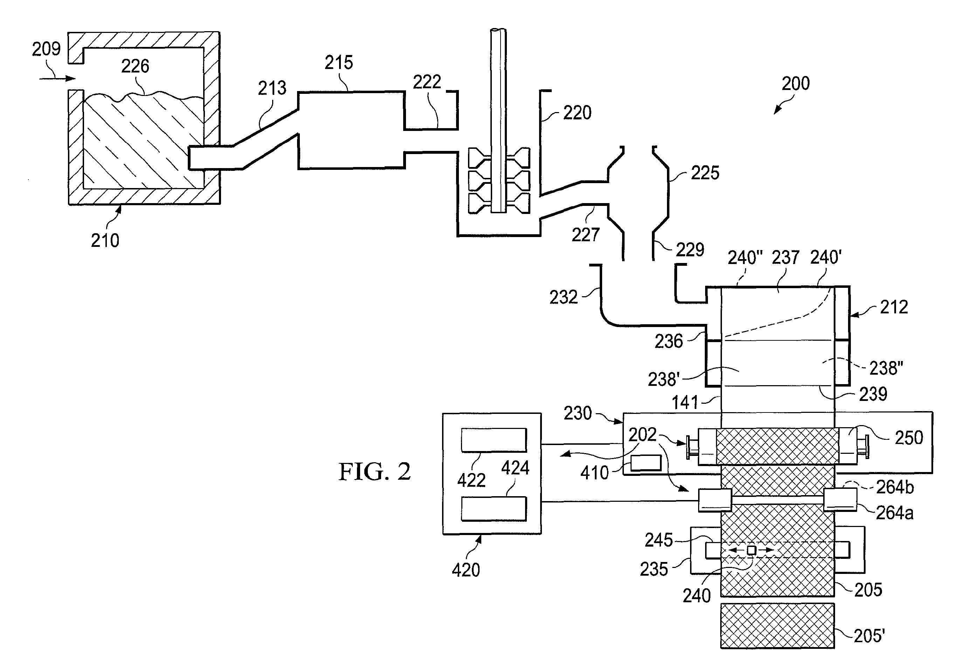

Referring to FIGURE 2, there is shown a schematic view of an exemplary glass manufacturing system 200 that uses a fusion draw process and a roll apparatus 202 to manufacture a textured glass sheet 205. As shown, the exemplary glass manufacturing system 200 includes a melting vessel 210, a fining vessel 215, a mixing vessel 220 (e.g., stir chamber 220), a delivery vessel 225 (e.g., bowl 225), a forming apparatus 212 (isopipe 212, vertical glass delivery device 212), a controlled environment 230, the roll apparatus 202, and a glass sheet separation device 235.

The melting vessel 210 is where glass batch materials are introduced as shown by arrow 209 and melted to form molten glass 226. The fining vessel 215 (e.g., finer tube 215) has a high temperature processing area that receives the molten glass 226 (not shown at this point) via a refractory tube 213 from the melting vessel 210 and in which bubbles are removed from the molten glass 226. The fining vessel 215 is connected to the mixing vessel 220 (e.g., stir chamber 220) by a finer to stir chamber connecting tube 222. The mixing vessel 220 is connected to the delivery vessel 225 by a stir chamber to bowl connecting tube 227. The delivery vessel 225 delivers the molten glass 226 through a downcomer 229 to an inlet 232 and into the isopipe 212 (see FIGURE 3). The isopipe 212 includes an inlet 236 that receives the molten glass 226 which flows into a trough 237 and then overflows top surfaces 240' and 240" and runs down two sides 238' and 238" before fusing together at what is known as a root 239. The root 239 is where the two sides 238' and 238" come together and where the two overflow walls of the molten glass 226 rejoin (e.g., refuse) to form a glass ribbon 241 which has smooth pristine surfaces.

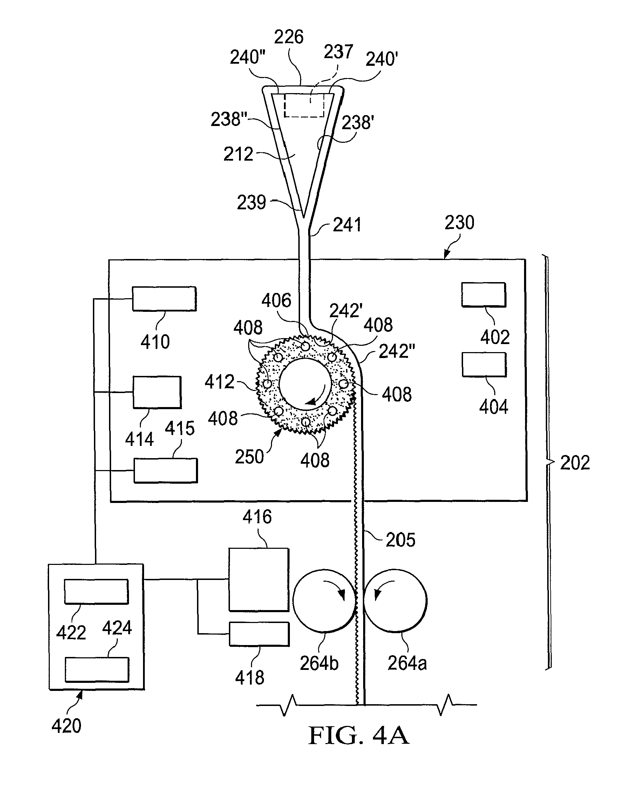

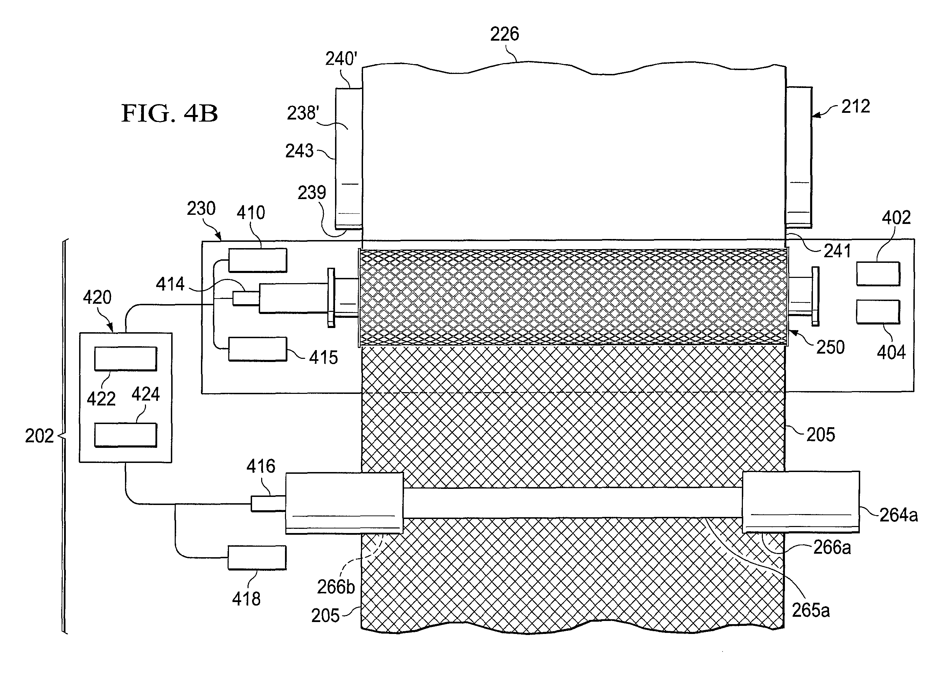

The glass ribbon 241 is subsequently rolled and textured by a porous textured roll 250 and then drawn downward by pulling rolls 264a and 264b (optional) which may be part of the roll assembly 202 to form the textured glass sheet 205 (see FIGURES 4A-4C). The controlled environment 230 (optional) is adapted to heat the glass ribbon 241 and the textured glass sheet 205 and if desired can provide an inert atmosphere around the porous textured roll 250 (e.g., graphite porous textured roll 250). Then, the glass sheet separation device 235 (optional) which may have a mechanical scoring device 240 (e.g., scoring wheel 240) and a nosing device 245 is used to mechanically score the textured glass sheet 205 so it can be separated into distinct pieces of textured glass sheets 205'. Alternatively, the textured glass sheet 205 can be rolled-up onto a take-up roll (not shown). A detailed discussion about the exemplary vertical roll apparatus 202 which patterns one side of the glass ribbon 241 to form the textured glass sheet 205 is provided next with respect to FIGURES 4A-4C.

Referring to FIGURES 4A-4C, there are different views illustrating in greater detail the exemplary isopipe 212, the exemplary controlled environment 230 and the exemplary vertical roll apparatus 202. As shown, the exemplary isopipe 212 has an effective width slightly larger than the desired width of the textured glass sheet 205 to be produced. Basically, the molten glass 226 flows over the walls 240' and 240" of the trough 237, flows down the walls 238' and 238" of body 243 and then these two flows join at the apex 239 (referred to as the root 239) to form the glass ribbon 241. The glass ribbon 241 leaves the isopipe 212 traveling downward in a substantially vertical direction and contacts the porous textured roll 250 while in a viscous regime with a viscosity range of about 100 to 100,000 poise, a more preferred range of about 100 to 5000 poise, and an even more preferred range of about 1000 to 2000 poise. In addition, the glass ribbon 241 can have a substantially constant thickness in a range of about 0.5-10.0 mm with preferred ranges of about 0.5-2.5 mm, 1.0-7.0 mm, and 2.0-4.0 mm.

The closed controlled environment 230 if used would normally be located below the isopipe 212 (or any other forming apparatus) and would function to heat in a controlled manner the glass ribbon 241 and the subsequent textured glass sheet 205. The controlled environment 230 can have one or more devices 402 that control the heating of the glass ribbon 241 and the textured glass sheet 205 by using forced convection, or an array of heating elements etc. For example, the controlled environment 230 can be made by enclosing at least a section of the process including the porous textured roll 250 and using: (1) thermal insulation to limit cooling from outside the manufacturing process; and/or (2) active heating such as electric heating that is applied through heating elements, windings or heated tubes etc. If desired, the controlled environment 230 can have one or more devices 404 that provide an inert atmosphere around the porous textured roll 250 (e.g., graphite porous textured roll 250).

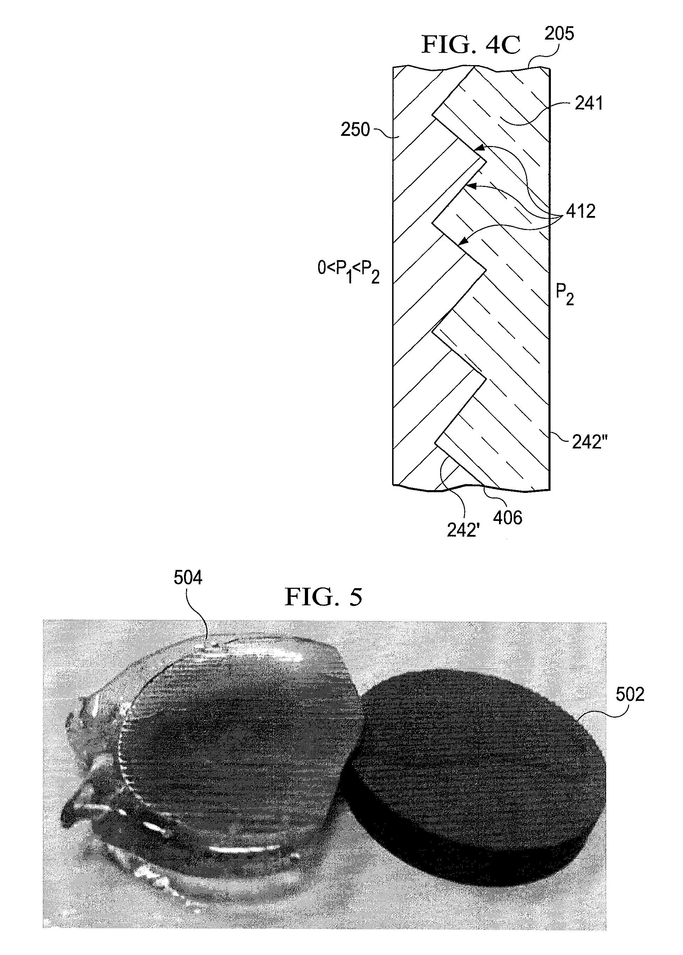

The roll apparatus 202 and specifically the porous textured roll 250 is located at a small distance below the isopipe 212 (or any other forming apparatus). The porous textured roll 250 has a textured outer surface 406 a portion of which receives the downward moving glass ribbon 241 so when the porous textured roll 250 rotates the glass ribbon 241 is textured to form the textured glass sheet 205. In this example, the porous textured roll 250 has one or more orifices 408 (eight shown) formed or bored therein and located below the outer surface 406. The roll apparatus 202 also includes a vacuum pumping device 410 that is adapted to apply at least a partial vacuum to the orifice(s) 408 within the porous textured roll 250 to create a first pressure P1 at an interface between a first side 242' of the glass ribbon 241 and the outer surface 406 of the porous textured roll 250. The first pressure P1 (e.g., 0.8 atmosphere down to virtually 0 atmosphere) is less than a second pressure P2 (e.g., 1.0 atmosphere) on a second side 242" of the glass ribbon 241. The difference between the first pressure P1 and the second pressure P2 is such that the first side 242' of the glass ribbon 241 is driven towards the outer surface 406 of the porous textured roll 250 to substantially replicate a textured pattern 412 on the outer surface 406 of the porous textured roll 250 to form the textured glass sheet 205. For instance, the difference between the first pressure P1 and the second pressure P2 can be about 0.2-1.0 atmosphere. FIGURE 4C is a diagram that illustrates how well the porous textured roll 250 while under a vacuum causes the textured pattern 412 on the outer surface 406 to fully penetrate the glass sheet 205 (compare to FIGURE 1C).

The porous textured roll 250 should have a porosity that is small-fine enough to resist mechanical degradation to limit abrasion and wear of the roll material, that would degrade the precision of the textured patterns 412) to avoid undesirable microtexturing on the glass ribbon 241, and to allow a significant reduced pressure P1. To accomplish this, the porous textured roll 250 can have for example a permeability in a range between 5 10⁻¹⁶ and 10⁻¹³ m² and preferably between 10⁻¹⁵ and 5 10⁻¹³ m². For example, the porous textured roll 250 can be made from graphite, metal alloys (that can be found in porous forms), or porous silicon carbide. An advantage of using a porous textured roll 250 made from graphite is that the glass ribbon 241 would be less prone to stick during the texturing phase when compared to a porous textured roll 250 made from a porous metal alloy or a porous silicon carbide. If the porous textured roll 250 is made from graphite then to prevent the problematical oxidation of the carbon it could be located within an inert atmosphere such as nitrogen or argon.

In one example, the porous textured roll 250 can be made from graphite which has an average pore size significantly smaller than the characteristic dimension of the textured pattern 412. For example, Carbone Lorraine 2191 graphite is one such graphite that can be used for some applications since it has an average grain size of about 15 µm, and a permeability of about 6.10⁻¹⁵m².

As shown in FIGURES 4A-4B, the porous textured roll 250 can be connected to suitable mechanical device(s) 414 (e.g., drive controller, motor) that enable the rotational movement of the porous textured roll 250. The rotational speed of the porous textured roll 250 can be adjusted to match the downward flow of the glass ribbon 241 provided by the isopipe 212. For clarity, the brackets and supports used to support the porous textured roll 250 and the mechanical device(s) 414 have not been shown. In addition, the roll apparatus 202 can include a temperature control system 415 which is adapted to maintain the porous textured roll 250 at a temperature colder than a temperature of the glass ribbon 241.

If desired, the roll apparatus 200 may include a pair of pulling rolls 264a and 264b located below the porous textured roll 250. In this example, the pulling rolls 264a and 264b extend across the width of the textured glass sheet 205 but have an undercut 265a and 265b formed therein so that the textured glass sheet 205 is contacted only near the two outer edges 266a and 266b. Thus, the pulling rolls 264a and 264b draw there between the first edge 266a and the opposing second edge 266b of the textured glass sheet 205. Alternatively, there could be four pulling rolls where two pulling rolls grab one outer edge 266a and the other two pulling rolls grab the other outer edge 266b. The pulling rolls 264a and 264b are shown located outside the controlled environment 230 but they could be located within the controlled environment 230. The pulling rolls 264a and 264b are connected to one or more suitable mechanical device(s) 416 (e.g., drive controllers, motors) that enable the rotational movements of the pulling rolls 264a and 264b. The pulling rolls 264a and 264b could be connected to one or more suitable mechanical device(s) 418 (e.g., air cylinder(s) 418) that apply a horizontal force between the pulling rolls 264a and 264b which enable the application of a horizontal force on the edges 266a and 266b of the textured glass sheet 205. For clarity, the brackets and supports used to support the pulling rolls 264a and 264b and the various mechanical devices 416 and 418 have not been shown.

The roll apparatus 202 includes a control device 420 which has one or more processors 422 and at least one memory 424 (storage 424) that includes processor-executable instructions where the one or more processors 422 are adapted to interface with the memory 424 and execute the processor-executable instructions to control the controlled environment 230, the vacuum pumping device 410, the temperature control system 415, and the various mechanical device(s) 414, 416 and 418. The one or more processors 422 and the at least one memory 424 can be implemented, at least partially, as software, firmware, hardware, or hard-coded logic.

The control device 402 interfaces with the controlled environment 230 to control the temperature of the glass ribbon 241 and if needed the inert atmosphere around the porous textured roll 250. The control device 402 also interfaces with the vacuum pumping device 410 to control the pressure of the vacuum drawn on the porous textured roll 250. Plus, the control device 420 interfaces with the temperature control system 415 to control the temperature of the porous textured roll 250. Moreover, the control device 420 interfaces with the mechanical device 414 and 416 to control the rotational speed, torque or combination speed and torque of the porous textured roll 250 and the pulling rolls 264a and 264b. In addition, the control device 420 interfaces with the mechanical device(s) 418 (e.g., air cylinder(s) 418) to open-close the pulling rolls 264a and 264b to apply a desired horizontal force to the textured glass sheet 205.

The control device 420 can be used to rotate the pulling rolls 264a and 264b at the same linear speed as the porous textured roll 250, or just slightly higher, to insure tensioning of the textured glass sheet 205. Alternatively, the control device 420 can control the pulling rolls 264a and 264b to rotate at a linear speed faster than the porous textured roll 250 to deliberately stretch and reduce the thickness of the textured glass sheet 205. In this case, the texture applied to the porous textured roll 250 would be designed to take into account the deformation of the texture that is rolled on the glass ribbon 241 during the further stretching caused by the pulling stage.

In any case, the textured glass sheet 205 after passing the pulling roll stage can be manipulated in various ways and in different directions (horizontal, inclined) using thermal devices and possibly mechanical (e.g. guidance) devices (not shown in FIGURE 2). Finally, the glass sheet separation device 235 which has the mechanical scoring device 240 (e.g., scoring wheel 240) and the nosing device 245 can be used to mechanically score the textured glass sheet 205 so it can then be separated into distinct pieces of textured glass sheets 205' (see FIGURE 2). Alternatively, individual textured glass sheets 205' can be cut from the continuous textured glass sheet 205 by using any sort of score and break device.

The individual textured glass sheets 205' can be used in a wide-variety of devices including, for example, photovoltaic devices and organic light emitting diode (OLED) lighting devices. For instance, the textured glass sheet 205' can improve the light trapping in photovoltaic devices through the addition of sub-millimeter prismatic patterns on a surface thereof. In particular, it has been evaluated that for such textured glass sheets 205' used in photovoltaic devices, the conversion yield can be improved (e.g., for micrimorph silicon photovoltaic cells). Plus, the textured glass sheets 205' can help with light management by optimizing light extraction from the OLED lighting devices.

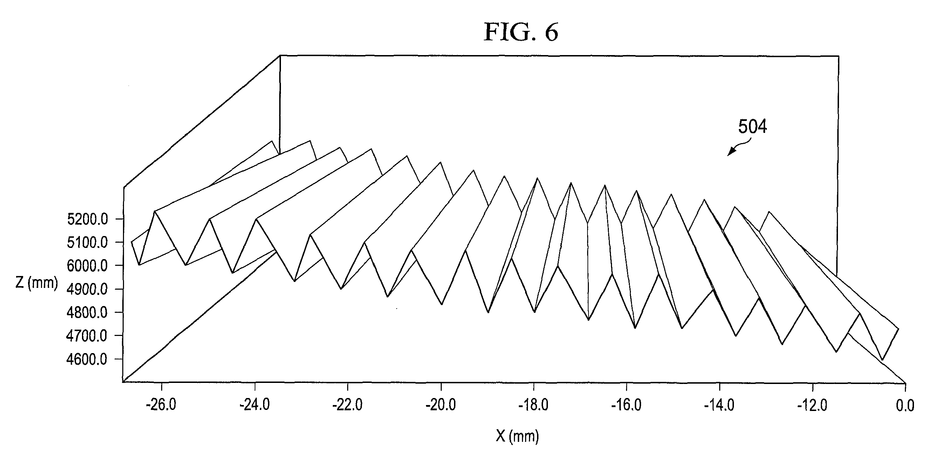

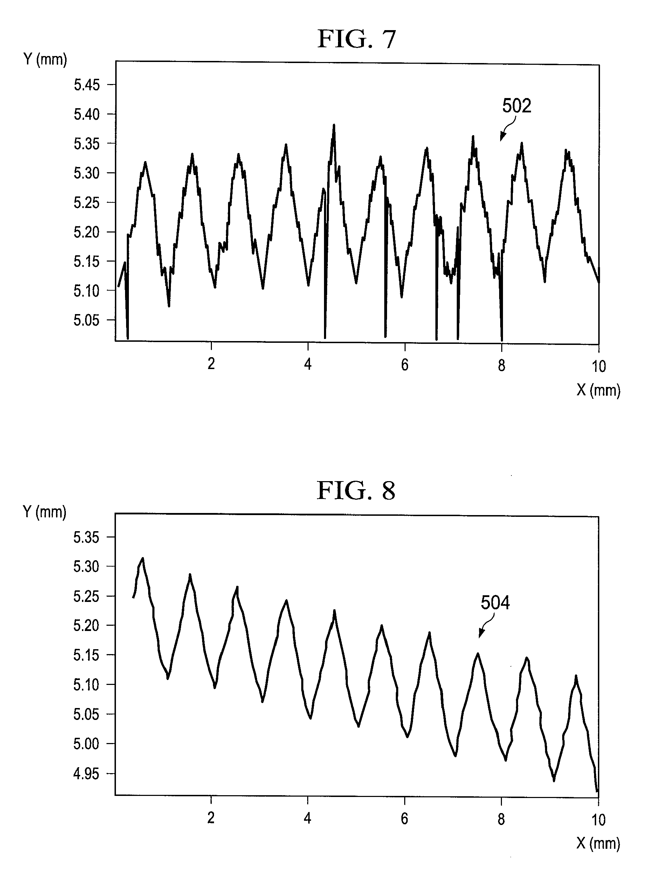

In a small scale test, an experimental textured graphite piece and vacuum device where used to texture a soda lime glass sample. FIGURE 5 is a photo that shows the textured graphite piece 502 (outer diameter 32 mm, thickness 6mm) used to texture the soda lime glass sample 504. The soda lime glass 504 had been preheated at a temperature close to 1200°C, corresponding to a viscosity of 1000 P. The textured graphite piece 502 had a temperature around 500°C and a partial vacuum applied on the back side (-0.8 atmosphere) when put in contact with the heated soda lime glass sample 504. After a 5 second contact time between the textured graphite piece 502 and the soda lime glass sample 504, the vacuum pressure was released, inducing the textured graphite piece 502 to separate from the soda lime glass sample 504. FIGURE 6 is a graph that shows the surface pattern of the textured soda lime glass sample 504 measured by confocal microscopy. FIGURE 7 is a graph illustrating the surface profile of the textured graphite piece 502 where the grooves had a period of about 1 mm and a depth of about 244 µm (x axis is position and y axis is height). FIGURE 8 is a graph illustrating the surface profile of the textured soda lime glass sample 504 where the grooves had a period of about 1 mm and a depth of about 244 µm (x axis is position and y axis is height). In FIGURE 8, the general slope in the surface profile of the textured soda lime glass sample 504 was caused by the positioning of the soda lime glass sample 504 during the surface profile measurement. As can be seen, the surface profile geometry of the textured graphite piece 502 was well replicated onto the soda lime glass sample 504, keeping the sharpness of groove edges pattern.

From the foregoing, one skilled in the art will appreciate that the roll apparatus 202 can form and texture one surface of a glass ribbon 241 while the second surface of the glass sheet 205 is untouched during the process. The patterns that can be formed include a variety of shapes and sizes (e.g.,spherical portions, grooves, prismatic shapes or random shapes) with a specifically high depth to width ratio and sharp edges, including sub-millimeter dimensions (e.g., sub-millimeter periods and/or sub-millimeter depths). The roll apparatus 202 textures the glass ribbon 241 at low viscosity on a porous textured roll 205 (e.g., textured graphite roll with micrometric porosity) onto which a partial vacuum is applied. Thus, the glass ribbon 241 is flattened against the porous textured roll 205 by the pressure difference existing between the reduced pressure (P1) residing at the interface with the porous textured roll 250 and the pressure (P2) on the opposite side of the glass ribbon 241 (equal to 1 atm. in normal conditions). The porous textured roll 250 is maintained at a temperature inducing the replication of its surface by the glass ribbon 241 and also to sufficiently cool it down such that further deformation is controlled. The roll apparatus 202 has several advantages some of which are as follows (for example):
- The capability to create sharp edged textures onto a sheet of glass.
- The capability to create high depth/width ratio textures.
- The capability to create a texture on a glass sheet of virtually any thickness (e.g., from 0.5 to 10 mm).
- The capability to form textured glass sheets from glasses that devitrify at low viscosities.
- The capability to form glass sheets with one side textured and one side potentially pristine.

The glass manufacturing system 200 that has been described herein used the fusion process and the isopipe 212 to provide the glass ribbon 241 to the roll apparatus 202. Alternatively, the glass manufacturing system 200 may use many different types of processes instead of the fusion process and many different types of forming apparatuses instead of the isopipe 212 to provide the glass ribbon 241 to the roll apparatus 202. For instance, the glass manufacturing system 200 may have a forming apparatus which includes a fishtail orifice with a slot orifice that delivers the glass ribbon 241 to the roll apparatus 202. Or, the glass manufacturing system 200 may have a forming apparatus which includes a downcomer tube with an inclined heated plate that delivers the glass ribbon 241 to the roll apparatus 202.

In addition, the roll apparatus 202 may include another porous textured roll in addition to the aforementioned porous textured roll 250. Like the first porous textured roll 250, the second porous textured roll would have one or more orifices formed or bored therein and located below an outer surface thereof. The second porous textured roll may be located in front of or below, advantageously below, the first porous textured roll 250 and positioned to texture the second side 242" of the textured glass sheet 205'. In particular, the vacuum pumping device 410 (or another vacuum pumping device) would apply at least a partial vacuum to the orifice(s) within the second porous textured roll to create a third pressure P3 at an interface between the second side 242" of the glass ribbon 241 and the outer surface of the second porous textured roll. The third pressure P3 (e.g., 0.8 atmosphere down to virtually 0 atmosphere) is less than a fourth pressure P4 (e.g., 1.0 atmosphere) on the first side 242' of the glass ribbon 241. The difference between the third pressure P3 and the fourth pressure P4 is such that the second side 242" of the glass ribbon 241 is driven towards the outer surface of the second porous textured roll to substantially replicate a textured pattern on the outer surface of the second porous textured roll 250 to form a two sided textured glass sheet 205. Alternatively, the roll apparatus 202 may include a rolling roll (e.g., smooth rolling roll) which is positioned on the other side of the porous textured roll 250.

Although several embodiments of the present solution have been illustrated in the accompanying Drawings and described in the foregoing Detailed Description, it should be understood that the solution is not limited to the disclosed embodiments, but is capable of numerous rearrangements, modifications and substitutions without departing from the solution as set forth and defined by the following claims.

## Claims

1. A method for manufacturing a textured glass sheet (205), the method comprising the steps of:
delivering a glass ribbon (241) to a porous textured roll (250) having at least one orifice (408) located therein and below an outer surface (406) thereof, where said porous textured roll (250) receives the glass ribbon (241) on a portion of the outer surface (406) while the glass ribbon (241) is viscous; and
applying at least a partial vacuum to the at least one orifice (408) within the porous textured roll (250) to create a first pressure (P1) at an interface between a first side (242') of the glass ribbon (241) and the outer surface (406) of the porous textured roll (250), where the first pressure is less than a second pressure (P2) on a second side (242") of the glass ribbon (241) such that the difference between the first pressure and the second pressure drives the first side (242') of the glass ribbon (241) towards the outer surface (406) of the porous textured roll (250) to at least substantially replicate a textured pattern (412) on the outer surface (406) of the porous textured roll (250) to form the textured glass sheet (205).

2. The method according to claim 1, wherein the partial vacuum applied results in the first pressure P1 and the second pressure P2 having a difference of about 0.2 - 1.0 atmosphere.

3. The method according to any of claims 1-2, further including a second porous textured roll having at least one orifice located therein and below an outer surface thereof, where the second porous textured roll is located in front of or below the first porous textured roll (250) and is positioned for texturing the second side (242") of the textured glass sheet (205).

4. The method according to any of claims 1-2, further including a non-porous roll positioned on another side of the porous textured roll (250) where the non-porous roll contacts the second side (242") of the textured glass sheet (205).

5. The method according to any of claims 1-4, wherein the textured pattern (412) on the outer surface (406) of the porous textured roll (250) are sub-millimeter spherical portions, sub-millimeter grooves, sub-millimeter prismatic shapes, or sub-millimeter random shapes.

6. The method according to any of claims 1-5, wherein the glass ribbon (241) has a thickness between about 0.5-10.0 mm.

7. The method according to any of claims 1-5, wherein the glass ribbon (241) has a thickness between about 0.5-2.5 mm.

8. The method according to any of claims 1-7, wherein the glass ribbon (241) has a viscosity in a range of about 100 poises to 5000 poises.

9. The method according to any of claims 1-8, wherein during the forming of the textured glass sheet (205) at least a portion of the second side (242") of the textured glass sheet (205) is not contacted by any mechanical surface.

10. A photovoltaic device or an organic light emitting diode comprising the textured glass sheet made according to any of claims 1-9.

11. A roll apparatus (202) which textures a glass ribbon (241) provided by a forming apparatus (212), the roll apparatus comprising:
a porous textured roll (250) having at least one orifice (408) located therein and below an outer surface (406) thereof;
the porous textured roll (250) positioned to receive the glass ribbon (241) on a portion of the outer surface (406) while the glass ribbon (241) is viscous; and
a vacuum pumping device (410) adapted to apply at least a partial vacuum to the at least one orifice (408) within the porous textured roll (250) to create a first pressure (P1) at an interface between a first side (242') of the glass ribbon (241) and the outer surface (406) of the porous textured roll (250), where the first pressure is less than a second pressure (P2) on a second side (242") of the glass ribbon (241) such that the difference between the first pressure and the second pressure drives the first side (242') of the glass ribbon (241) towards the outer surface (406) of the porous textured roll (250) to substantially replicate a textured pattern (412) on the outer surface (406) of the porous textured roll (250) to form a textured glass sheet (205).

12. The roll apparatus (202) according to claim 11, further comprising:
a control device (420) adapted to control at least one first mechanical device (414) which is adapted to rotate the porous textured roll (250) at a desired speed; and
the control device (420) adapted to control the vacuum pumping device (410) to apply at least the partial vacuum to the at least one orifice (408) within the porous textured roll (250).

13. The roll apparatus (202) according to any of claims 11-12, further comprising a temperature control system (415) adapted to maintain the porous textured roll (250) at a temperature which is colder than a temperature of the glass ribbon (241).

14. The roll apparatus (202) according to any of claims 11-13, further including a second porous textured roll having at least one orifice located therein and below an outer surface thereof, where the second porous textured roll is located in front of or below the first (250) porous textured roll and is positioned to texture the second side (242") of the textured glass sheet (205).

15. The roll apparatus (202) according to any of claims 11-13, further including a non-porous roll positioned on another side of the porous textured roll (250) where the non-porous roll contacts the second side (242") of the textured glass sheet (205).
